# EUROPEAN PATENT APPLICATION

(11) **EP 4 675 281 A1**
(43) Date of publication of application: **07.01.2026**
(21) Application number: 24763543.6
(22) Date of filing: 07.02.2024
(51) Int. Cl.: G01N 35/00

(54) **AUTOMATIC ANALYSIS DEVICE AND AUTOMATIC ANALYSIS METHOD**

(30) Priority: 27.02.2023 JP 2023028261
(71) Applicant: HITACHI HIGH-TECH CORPORATION, Tokyo 105-6409 (JP)
(72) Inventor: TOYAMA Yui, Tokyo 105-6409 (JP); MORI Takamichi, Tokyo 105-6409 (JP); TAKAHASHI Kenichi, Tokyo 105-6409 (JP); SAGAE Nozomi, Tokyo 105-6409 (JP); MUGHAL Imama, Tokyo 105-6409 (JP)
(74) Representative: MERH-IP Matias Erny Reichl Hoffmann Patentanwälte PartG mbB
(86) International application number: PCT/JP2024/004013
(87) International publication number: WO 2024/181059

(57) **Abstract**

The present disclosure proposes (see FIG. 3) an automatic analyzer that executes automatic blank calibration to ensure device performance when automatic blank calibration is implemented, and measures change over time in a mixture liquid obtained by mixing a specimen and a reagent, said automatic analyzer comprising a reaction vessel capable of accommodating the specimen and the reagent, an analysis unit that measures the mixture liquid accommodated in the reaction vessel, and a control unit, wherein the control unit executes analysis preparation operations including a reaction chamber temperature detection operation for performing temperature control of the reaction vessel, and other operations, and confirms that the condition of the automatic analyzer is stable, before executing the automatic blank calibration.

## Description

### Technical Field

The present disclosure relates to an automatic analyzer and an automatic analysis method.

### Background Art

An automatic analyzer measures a biological sample (also referred to as a specimen) such as blood or urine and processes obtained data. For example, the automatic analyzer measures a change over time in absorbance for a solution obtained by mixing a certain amount of a sample and a reagent and stirring the mixture to cause a reaction, and calculates a concentration of a target substance, an enzyme activity value, and the like as measurement values. For maintenance and inspection of such an automatic analyzer, an operator needs to perform maintenance of the device. A variety of maintenance items are provided depending on a purpose, such as maintenance performed by a clinical laboratory technician or a service man of a device manufacturer, and maintenance automatically performed by the device. According to a result of the maintenance, the operator cleans the device or replaces consumables.

The operator periodically measures a standard solution for reagent calibration, a quality control sample to check a condition of the device or the reagent, or the like in the automatic analyzer, thereby grasping a condition of the reagent, the sample, or the like and discovering an abnormality in the device condition before measuring the biological sample.

In the automatic analyzer, blank calibration may be implemented. The blank calibration is an operation of measuring absorbance of a reagent dispensed into a reaction vessel and determining absorbance at zero concentration of a target substance (item). By implementing the blank calibration, a calibration curve corresponding to each reagent condition can be drawn. For a reagent that is likely to deteriorate, it is desirable to implement blank calibration more frequently than other reagents. A result of the blank calibration can be used to check a condition of the reagent and to consider replacing the reagent. In laboratories, it is often routine work to implement blank calibration before measuring a quality control sample or a biological sample or immediately after replacing reagent.

In recent years, due to expansion of work in laboratories, clinical laboratory technicians dedicated to operating automatic analyzers tend to decrease, and time and workload that the clinical laboratory technicians can devote to per device are limited. Therefore, it is also required to automate daily maintenance and analysis operations in the automatic analyzer and reduce the workload of the clinical laboratory technician.

For example, PTL 1 discloses an automatic analyzer that performs automatic blank calibration using system water of a device as a standard solution. Specifically, PTL 1 discloses that "when the system water is used as the blank standard solution, the system water discharged from the pretreated specimen dispensing mechanism 8 to the reaction vessel 9 reacts with the reagent dispensed from the reagent dispensing mechanism 13, and a change in absorbance of the reaction solution thereof is measured in the same manner as in the flow in which the pretreated solution described above is used as the blank standard solution". By enabling the automatic blank calibration, for example, when setting is performed so that processing from power-on of the device to the blank calibration is automatically completed in accordance with an arrival time of the clinical laboratory technician, operations necessary for measurement of the sample such as maintenance of the device and the blank calibration are completed before start of the work, and thus there is an advantage that an operator can start measurement of the sample immediately after the start of the work.

### Citation List

### Patent Literature

PTL 1: JP2011-226889A

### Summary of Invention

### Technical Problem

However, in the automatic analyzer described in PTL 1, it is not confirmed whether a device condition before implementing the automatic blank calibration is a condition suitable for absorbance measurement. Therefore, the automatic blank calibration may be implemented in a condition unsuitable for the absorbance measurement, and accuracy of an analysis result by the automatic analyzer cannot be guaranteed.

In view of such a situation, the present disclosure provides a technique for ensuring device performance when implementing automatic blank calibration.

### Solution to Problem

In order to solve the above problem, the present disclosure proposes an automatic analyzer for executing automatic blank calibration, and measuring a change over time in a mixture liquid obtained by mixing a specimen and a reagent. The automatic analyzer includes: a reaction vessel configured to accommodate the specimen and the reagent; a reaction chamber configured to control a temperature of the reaction vessel; an analysis unit configured to measure the mixture liquid accommodated in the reaction vessel; and a control unit, and the control unit executes, before executing the automatic blank calibration, analysis preparation operations including a reaction chamber temperature detection operation and other operations, and confirms that a condition of the automatic analyzer is stable.

Additional features related to the present disclosure will be clarified from the description of the present description and the accompanying drawings. Aspects of the present disclosure may be achieved and implemented using elements, combinations of various elements, the following detailed description, and accompanying claims.

Descriptions in this description are merely exemplary, and are not intended to limit the scope of the claims or application of the present disclosure in any sense.

### Advantageous Effects of Invention

According to the technique of the present disclosure, since the automatic blank calibration is implemented when it is determined that a device condition of the automatic analyzer is good, a result of the automatic blank calibration is ensured by analysis performance.

### Brief Description of Drawings

[FIG. 1] FIG. 1 is a diagram illustrating a schematic configuration example of an automatic analyzer 100 applicable in common to each embodiment.
[FIG. 2A] FIG. 2A is a diagram illustrating a collective preparation operation setting screen when automatic blank calibration is not selected (not implemented).
[FIG. 2B] FIG. 2B is a diagram illustrating a collective preparation operation setting screen when the automatic blank calibration is selected (implemented).
[FIG. 3] FIG. 3 is a flowchart illustrating an example of an analysis preparation operation before implementing the automatic blank calibration in a collective preparation operation.
[FIG. 4] FIG. 4 is a diagram illustrating a configuration example of a collective preparation operation setting screen 400 in which a timeout setting function of blank calibration is added to the collective preparation operation setting screen illustrated in FIG. 2A.
[FIG. 5] FIG. 5 is a flowchart illustrating automatic setting processing with a maintenance performing order in a collective preparation list.
[FIG. 6] FIG. 6 is a diagram illustrating a configuration example of an analysis parameter setting screen 600 for each item of the automatic blank calibration.
[FIG. 7] FIG. 7 is a flowchart illustrating the collective preparation operation when a waiting time for stability of a light source lamp 113 is omitted according to a second embodiment.
[FIG. 8] FIG. 8 is a diagram illustrating a configuration example of a collective preparation operation setting screen 800 for setting a time-saving mode.

### Description of Embodiments

Hereinafter, embodiments of the present disclosure will be described with reference to the drawings. In the following embodiment, components (also including element steps and the like) thereof are not necessarily essential unless otherwise specified or unless clearly considered to be essential in principle. In addition, a part of configurations of each embodiment can be replaced with a configuration of another embodiment. In addition, a configuration of another embodiment can also be added to a configuration of each embodiment. In addition, another configuration can be added to, deleted from, or replaced with a part of a configuration of each embodiment.

### (1) First Embodiment

### <Configuration Example of Automatic Analyzer>

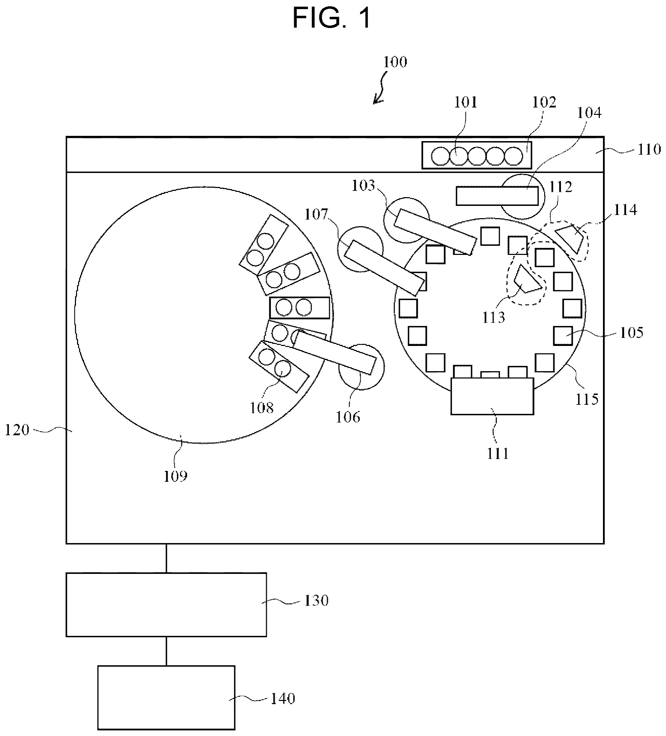

FIG. 1 is a diagram illustrating a schematic configuration example of an automatic analyzer 100 applicable in common to each embodiment.

The automatic analyzer 100 includes a specimen installation unit 110, an analysis unit 120, a control unit (control device: for example, a computer) 130, and a display device 140. In the specimen installation unit 110, a specimen such as blood or urine is sorted into a specimen vessel 101 installed in a specimen conveying rack 102, and is conveyed to positions of specimen dispensing mechanisms 103 and 104 of the analysis unit 120. Hereinafter, such a specimen conveying mechanism is referred to as a rack type. In a reaction vessel 105, the specimen aspirated from the specimen vessel 101 by the specimen dispensing mechanisms 103 and 104 and a reagent aspirated from a reagent bottle 108 in a reagent disk 109 by reagent dispensing mechanisms 106 and 107 are dispensed. The reaction vessels 105 (also referred to as reaction cells) are installed on a circumference of a reaction chamber 115 in the analysis unit 120. A reaction solution of the specimen and the reagent is stirred by an ultrasonic wave generated by a stirring device 111. Then, the reaction vessel 105 rotates and moves. When the reaction vessel 105 passes on an optical axis of a spectrophotometer 112 (broken line portion), absorbance of the reaction solution is measured each time. The spectrophotometer 112 includes a light source lamp 113 and a detector 114, and the detector 114 receives light transmitted through the light source lamp 113 via the reaction vessel 105. The control unit 130 calculates a concentration of a target component in the reaction solution based on information on the measured absorbance, and displays the result on the display device 140.

In the automatic analyzer 100, the control unit 130 performs various types of maintenance on the specimen installation unit 110 and the analysis unit 120 to maintain performance of each mechanism. The display device 140 includes a monitor screen for displaying an operation status and the like of the automatic analyzer 100 and an input device such as a keyboard.

Although the present embodiment is described assuming a rack type, an operation according to the present embodiment described below is also applicable to a disk-type automatic analyzer in which the specimen vessel 101 is placed on a disk on a top surface of the device.

In the automatic analyzer 100, measurement performed for calibration and condition confirmation of the reagent is referred to as calibration. As a sample to be measured, a blank standard solution that does not contain a target substance component and one or more standard solutions (also referred to as calibrators) with understood concentration of a target substance are used. Calibration for measuring absorbance of a reaction solution of only the blank standard solution and the reagent is referred to as blank calibration. The blank standard solution used for the blank calibration is ion-exchanged water (also referred to as pure water) or physiological saline used as device system water, or a zero concentration standard solution exclusively for reagents. The automatic analyzer 100 according to the present embodiment is configured to automatically execute an analysis preparation operation (described later). The automatic analyzer 100 is configured to execute automatic blank calibration in response to selection of an operator, and is configured to automatically execute blank absorbance measurement before the execution of the automatic blank calibration when the automatic blank calibration is selected.

### <About Collective Preparation Operation>

The automatic analyzer 100 requires maintenance corresponding to each timing, such as when device performance is unstable immediately after power-on, before starting an analysis, or before shutting down the device at the end of the day (maintenance is recommended). A function in which the operator selects and lists any number of these maintenance items and the control unit 130 executes a maintenance item group registered in the list is referred to as a collective preparation operation. The collective preparation operation can be performed, for example, at the time of power-on, at the time of return from a sleep condition, before starting an analysis, or at any timing of an operator.

In the present embodiment, among the maintenance items and check items of the device condition that do not depend on a setting of the operator, operations of checking analysis performance is collectively referred to as the analysis preparation operation. For example, (i) blank absorbance measurement of the reaction vessel 105, (ii) detection of a lighting time of the light source lamp 113, and (iii) temperature detection of the reaction chamber 115 are examples of the analysis preparation operation. In the present embodiment, the analysis preparation operation before the execution of the automatic blank calibration includes the temperature detection of the reaction chamber 115 that is not executed in the related art as the analysis preparation operation.

### (i) Blank Absorbance Measurement of Reaction Vessel 105

The blank absorbance measurement of the reaction vessel 105 refers to measuring absorbance in a condition where only the system water of the device is dispensed into the reaction vessel 105. In the present embodiment, the blank absorbance measurement is performed by an item mounted on the device as the maintenance item. For example, a photometer check to measure the blank absorbance of one reaction vessel 105 or cell blank measurement to measure the blank absorbance of all the reaction vessels 105 installed in the reaction chamber 115 (which takes longer than that of the photometer check) is classified as the blank absorbance measurement (maintenance item). Since the reaction vessel 105 deteriorates as the measurement is repeated, and an inside and outside of the vessel are easily contaminated or damaged, periodic replacement is necessary. For example, when the device is operated under standard use conditions, the reaction vessel 105 is recommended to be replaced with a new one every month. This is because there is a possibility that correct absorbance cannot be measured when the measurement is performed with contamination or damage.

### (ii) Detection of Lighting Time of Light Source Lamp 113

The detection of the lighting time of the light source lamp 113 is an operation necessary for ensuring stability of a light amount, considering a characteristic of a lamp that the lamp is dark immediately after lighting and is stabilized in a condition in which the light amount is increased over time. In the normal automatic analyzer 100, it is necessary to provide a waiting time until a predetermined time elapses after the light source lamp 113 is turned on. The absorbance measured when the light amount of the light source lamp 113 is insufficient may be higher than original absorbance of the sample because the absorbance is as in the case of measuring a sample with high turbidity. An example of a lamp used for the light source lamp 113 is a halogen lamp. It is known that a light amount of the halogen lamp gradually decreases as the total lighting time increases. For example, in the automatic analyzer 100, the light source lamp 113 is recommended to be replaced with a new one every six months. This is because the light source lamp 113 generates heat, and therefore, in order to perform stable measurement, a waiting time is required until components and an ambient temperature thereof become stable.

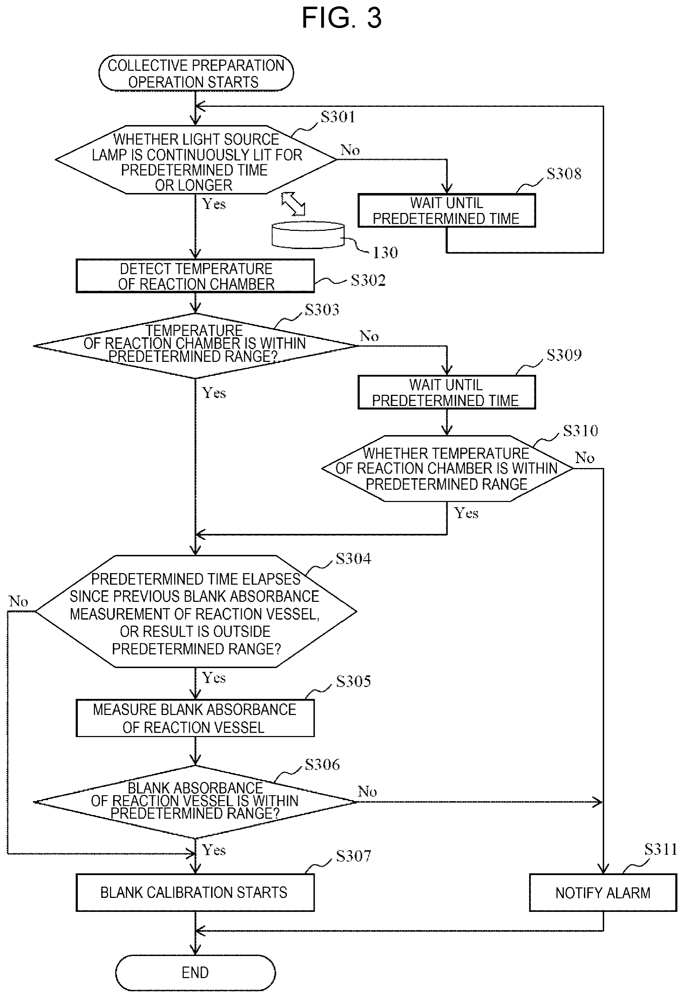

Whether the light source lamp 113 is stabilized is checked also in an analysis preparation operation in the related art, but whether the light source lamp 113 is stabilized is determined based on visual observation of an operator. In contrast, in the first embodiment, the lighting time of the light source lamp 113 is detected, and it is automatically determined whether to execute the next analysis preparation operation (temperature detection of the reaction chamber 115) based on the result (see FIG. 3).

### (iii) Temperature Detection of Reaction Chamber 115

The temperature detection of the reaction chamber 115 is necessary because a temperature of the reaction chamber 115 affects reagent performance in the reaction vessel 105 and accuracy of reaction between the specimen and the reagent. In order to ensure performance of the specimen and the reagent, the temperature of the reaction chamber 115 is maintained in a range of 37.0±0.1°C in the automatic analyzer 100. This temperature range is within a range of an optimum temperature of an enzyme contained in the reagent. When a water temperature does not rise completely, for example, immediately after the automatic analyzer 100 is turned on, or when the water temperature becomes very high, reaction efficiency of the reagent decreases, and an accurate measurement result cannot be obtained. Therefore, the specimen cannot be measured while the temperature of the reaction chamber 115 is out of the above range.

Among the analysis preparation operations described above, checking the lighting time of the light source lamp 113 and performing blank absorbance measurement of the reaction vessel 105 are not essential in the related art for measuring a specimen. In the automatic blank calibration described in PTL 1, the above-described analysis preparation operation is not necessarily performed in the collective preparation operation. For example, when the operator measures the sample without performing the photometer check, even if small dust adheres to the reaction vessel 105 into which the sample is dispensed, correct absorbance may not be measured if the dust is not removed by the simple check of the automatic analyzer before an analysis operation. In the automatic analyzer in the related art and PTL 1, the temperature detection of the reaction chamber 115 is essential for measuring a specimen. In this case, and it is performed at a timing after a completion of the collective preparation operation and before start of the specimen measurement operation.

In contrast, the automatic analyzer according to the present embodiment is characterized in that the implementation of these analysis preparation operations is essential in the collective preparation operation in which the automatic blank calibration is implemented, thereby ensuring the analysis performance that is not ensured in the collective preparation operation of the automatic analyzer in the related art.

### <Registration of Blank Calibration and Analysis Preparation Operation in Collective Preparation Operation>

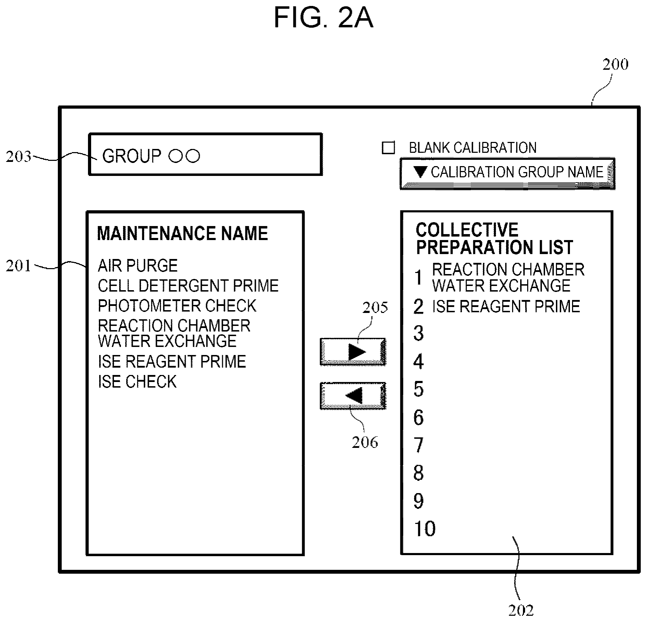

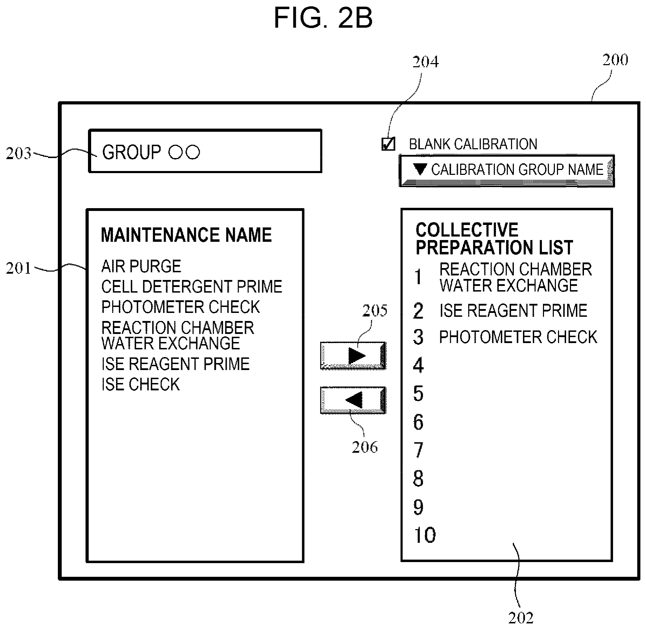

FIGS. 2A and 2B are diagrams illustrating the registration of the blank calibration and the analysis preparation operation in the collective preparation operation. FIG. 2A is a diagram illustrating a collective preparation operation setting screen when the automatic blank calibration is not selected (not implemented). FIG. 2B is a diagram illustrating a collective preparation operation setting screen when the automatic blank calibration is selected (implemented).

As illustrated in FIGS. 2A and 2B, a collective preparation operation setting screen 200 includes an item list 201 including at least one maintenance item or analysis preparation item, a collective preparation list 202, a registered group name 203, a check box 204 for enabling execution of blank calibration, an add arrow 205, and a delete arrow 206.

### (i) When Automatic Blank Calibration is not Executed

When the automatic blank calibration is not executed, in FIG. 2A, an operator can simply select a maintenance item or an analysis preparation item to be registered as the collective preparation operation from the item list 201 and add the maintenance item or the analysis preparation item to the collective preparation list 202 (for example, click a target item and press the add arrow 205). In order to exclude a specific item once selected from the collective preparation list 202, for example, the operator clicks the target item in the collective preparation list 202 and presses the delete arrow 206.

When selection of items to be in the collective preparation list 202 is completed, the control unit 130, in response to a registration instruction by the operator, stores (registers) the items registered in the collective preparation list 202 in a storage device (not illustrated) as one group of the collective preparation operation. Then, by selecting the registered group, the operator can automatically implement the items in an ascending order of numbers in the list. For example, as illustrated in FIG. 2A, in a case where reaction chamber water exchange and ISE reagent prime are registered as one group in the collective preparation list 202, when the operator selects the group, the processing is executed in this order (order of the reaction chamber water exchange → ISE reagent prime). The registered collective preparation list 202 is managed by the registered group name 203 at the top of the screen, and can be selected for each group name (a selection screen is not illustrated).

### (ii) When Automatic Blank Calibration is Executed

The automatic blank calibration is set by enabling (checking) the automatic blank calibration selection field 204 provided at the top of the collective preparation operation setting screen 200. At this time, the analysis preparation operation items implemented before the automatic blank calibration are also automatically incorporated into the list of collective preparation operation. Analysis preparation operation items other than the cell blank measurement (for example, the temperature detection of the reaction chamber 115) are not items displayed in the item list 201 and are therefore registered only in the control unit 130.

When the automatic blank calibration is set, the cell blank measurement or photometer check for measuring the blank absorbance of the reaction vessel 105 is automatically added to the collective preparation list 202. FIG. 2B illustrates a condition in which the photometer check is automatically added. The cell blank measurement is a maintenance item corresponding to the blank absorbance measurement of the reaction vessel 105, and when the reaction vessel 105 is contaminated or damaged, an alarm can be issued to indicate that the reaction vessel 105 is unusable (maintenance or replacement recommended). The items to be automatically added (cell blank measurement, photometer check, or both) may be set and registered in advance by the operator, or may be requested to be selected by the operator each time automatic blank calibration is set.

Accordingly, the operator is no longer required to manually register the analysis preparation operation, and there is no risk of missing registration or missing execution of the analysis preparation operation required for the automatic blank calibration. In the automatic analyzer 100 according to the present embodiment, regarding the automatic calibration measurement at the time of the collective preparation operation, information on a standard solution to be used can be registered and changed by entering a code (not illustrated) on the analysis parameter setting screen, similarly to the existing automatic analyzer. Accordingly, the setting of the standard solution in the blank calibration can be selected for each item from the system water or given sample (physiological saline, calibrator, or the like) prepared by the operator. Therefore, when it is desired to implement the calibration only with a given sample, a code unique to the given sample can be entered in a field for designating a zero concentration standard solution.

### <Details of Analysis Preparation Operation>

FIG. 3 is a flowchart illustrating an example of the analysis preparation operation before implementing the automatic blank calibration in the collective preparation operation.

### (i) S301 and S308

Immediately after start of the collective preparation operation, in order to confirm that a light amount of the light source lamp 113 is stabilized, the control unit 130 determines whether the light source lamp 113 is continuously lit for a predetermined time or longer. If the predetermined time is not reached, the control unit 130 waits until the predetermined time is reached. For example, if the predetermined time is set to 30 minutes, it is considered that a halogen lamp used as the light source lamp 113 is sufficiently lit and the light amount reaches a light amount suitable for measuring the absorbance.

### (ii) S302

The control unit 130 detects a temperature of the reaction chamber 115.

### (iii) S303

The control unit 130 determines whether the temperature of the reaction chamber 115 is within a predetermined range (for example, a range given by a specification). If the temperature of the reaction chamber 115 is within the predetermined range (Yes in S303), the processing proceeds to S304. Meanwhile, if the temperature of the reaction chamber 115 is not within the predetermined range (No in S303), the processing proceeds to S309.

### (iv) S304

The control unit 130 reads out an elapsed time from the blank absorbance measurement (previous blank absorbance measurement) of the reaction vessel 105 implemented immediately before and a measurement result, and determines whether the elapsed time exceeds a predetermined time (for example, 24 hours) set in advance by the operator, or whether an immediately previous (previous) result is outside a predetermined absorbance range (for example, a range given by the specification).

If the predetermined time elapses or the immediately previous result is outside the predetermined absorbance range (Yes in S304), the processing proceeds to S305. If the time is within the predetermined time and the immediately previous result is within the predetermined absorbance range (No in S304), the processing proceeds to S307.

### (v) S305

The control unit 130 executes blank absorbance measurement of the reaction vessel 105. In the present embodiment, the blank absorbance measurement of the reaction vessel 105 performed in S305 is assumed to be blank absorbance measurement performed as the maintenance item. Therefore, the operation is different from absorbance measurement of water blank that is automatically performed in the automatic analyzer 100 before measuring the sample.

### (vi) S306

The control unit 130 determines whether a blank absorbance value of the reaction vessel 105 measured in S305 satisfies a predetermined absorbance range (for example, a range given in a similar specification as described above). If a measurement value of the blank absorbance is within the predetermined absorbance range (Yes in S306), the processing proceeds to S307. If the measurement value of the blank absorbance is outside the predetermined absorbance range (No in S306), the processing proceeds to S311.

### (vii) S307

The control unit 130 executes the automatic blank calibration based on an item requested for analysis or an analysis parameter. In S304, if the blank absorbance measurement result of the reaction vessel 105 performed immediately before and the elapsed time both satisfy the predetermined range (No in S304), the blank absorbance measurement of the reaction vessel 105 this time may be omitted. Accordingly, a maintenance work time can be shortened while the device performance is ensured.

### (viii) S309

If the temperature of the reaction chamber 115 is outside the predetermined range in S303 (No in S303), the control unit 130 waits until a predetermined time elapses.

### (ix) S310

The control unit 130 determines again whether the temperature of the reaction chamber 115 is within the predetermined range. If the temperature of the reaction chamber 115 is within the predetermined range (Yes in S310), the processing proceeds to S304. Meanwhile, if the temperature of the reaction chamber 115 is still outside the predetermined range (No in S310), the processing proceeds to S311.

### (x) S311

The control unit 130 interrupts the collective preparation operation and displays an alarm (such as a message) on the display device 140. For example, if a predetermined temperature range of the reaction chamber 115 is set to 37.0±0.1°C, the range matches an optimum temperature range in the above-described reagent reaction. Therefore, it is possible to prevent a reaction at the reaction chamber temperature inappropriate for the reagent reaction.

In addition, in S306, if the blank absorbance of the reaction vessel 105 is out of the predetermined range, the control unit 130 outputs an alarm on a screen of the display device 140, notifies that calibration is not implemented due to an abnormality in the collective preparation operation, and interrupts the collective preparation operation. Accordingly, since the calibration is not implemented when there is an abnormality in the reaction vessel 105, after performing necessary maintenance, the operator can use a normal reaction vessel 105 to perform the calibration in which the analysis performance is ensured.

In the automatic analyzer in the related art, even when a result of the photometer check or the cell blank measurement indicates an abnormal value, an alarm is not output except for a specific case. This is because a photometer abnormality cannot be immediately determined based on a cell portion tank measurement result. This is because even if the cell blank measurement result indicates an abnormal value, the reaction vessel 105 indicating the abnormal value can be simply skipped without being used. Therefore, the operator needs to open a maintenance screen of an operation unit in order to view the result. Further, an operator who is not dedicated to the automatic analyzer is unfamiliar with the operation, and there is a possibility that the operator cannot sufficiently confirm the result and cope with a problem. According to the present embodiment, since the alarm of abnormality detection is issued in the S311, the operator can reliably notice the abnormality of the analysis preparation operation in real time, and can take appropriate measures according to information indicated by the alarm.

As described above, in the collective preparation operation, when the temperature of the reaction chamber 115 is abnormal or the blank absorbance of the reaction vessel 105 is abnormal, the collective preparation operation is interrupted, and the automatic blank calibration is not implemented. Therefore, it is possible to prevent a calibration failure due to a condition failure of the automatic analyzer 100. Accordingly, waste of the reagent can be prevented, and time and effort for re-measurement can be saved. In addition, it is possible to prevent a delay in reporting by notifying the operator with an alarm.

### <Timeout Setting>

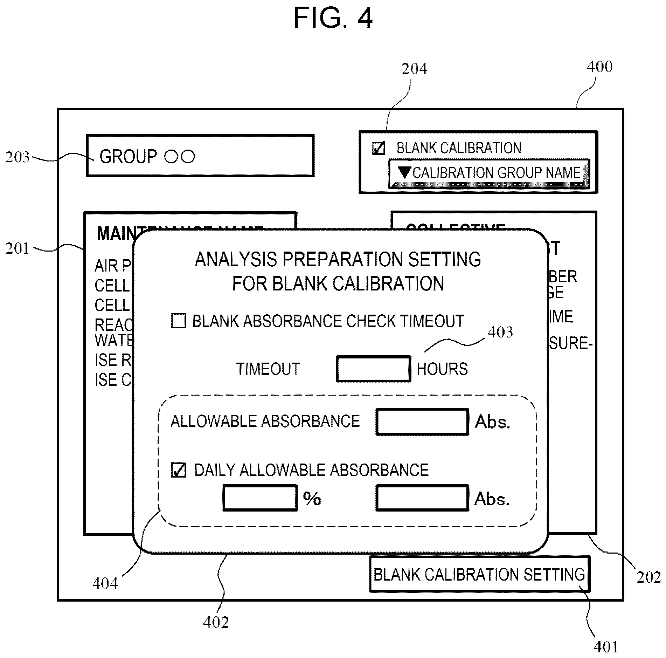

Setting of the predetermined time in the processing of S304 in FIG. 3 will be described. FIG. 4 is a diagram illustrating a configuration example of a collective preparation operation setting screen 400 in which a timeout setting function of blank calibration is added to the collective preparation operation setting screen illustrated in FIG. 2A.

When the operator presses a blank calibration setting button 401 at a bottom right of the collective preparation operation setting screen 400, a pop-up screen 402 for analysis preparation operation setting for the automatic blank calibration appears. On the pop-up screen 402, when the operator enables (checks) a check box of a blank absorbance check timeout, a previous validity time of the blank absorbance measurement of the reaction vessel 105 in the selected collective preparation operation list can be set. For example, when a timeout 403 is set to 4 hours, in the collective preparation operation including the automatic blank calibration, a result of the blank absorbance of the reaction vessel 105 within 24 hours of the implementation can be used instead. Therefore, it is not necessary to perform absorbance measurement again. Even if power supply is turned off, data within 24 hours can be stored in the control unit 130 and used.

The operator can set a threshold for blank absorbance measurement of the reaction vessel 105 by inputting a predetermined value in an allowable absorbance field 404. As an example, when the operator enables a daily allowable absorbance (24-hour allowable absorbance) (checks a check box), the control unit 130 invalidates the blank absorbance measurement of the reaction vessel 105 if a difference between the blank absorbance measurement and a previous blank absorbance measurement value is out of a predetermined range, and determines to stop the measurement before implementing the automatic blank calibration. Here, by stopping the calibration, it is possible to prevent a calibration failure due to contamination or damage on the reaction vessel 105 or deterioration of the light source lamp 113 or the like, and the operator can perform necessary maintenance or replacement of consumables. Therefore, it is possible to check a condition of contamination or damage on the reaction vessel 105 and the deterioration of the light source lamp 113 and the detector 114 at any time, thereby minimizing an influence on the analysis performance. By checking performance by comparing the measurement with the previous blank absorbance measurement value, it is possible to notify the operator of, for example, a replacement time of the reaction vessel 105 or the light source lamp 113. Therefore, a replacement cycle of consumables, which is recorded individually by the operator in the related art, can be recorded and managed on the device. Accordingly, it is possible to prevent deterioration of consumables due to forgetting to replace the consumables, and occurrence of a false value of a measurement result due to damage, contamination, or the like of the reaction vessel 105.

### (2) Second Embodiment

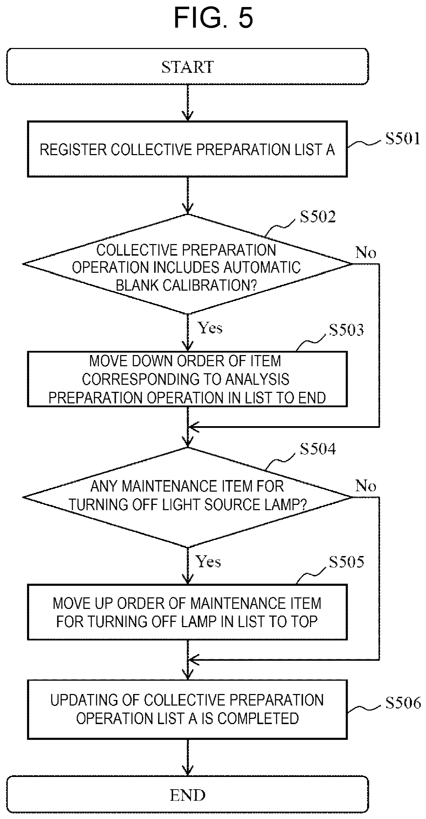

Hereinafter, the second embodiment of the present disclosure will be described with reference to FIGS. 5 to 7. A configuration example of the automatic analyzer 100 illustrated in FIG. 1 is also applicable to the second embodiment. The functions according to the first embodiment and functions according to the second embodiment can be used in combination as long as the functions do not contradict each other.

### <Automatic Setting Processing with Maintenance Performing Order in Collective Preparation List>

FIG. 5 is a flowchart illustrating the automatic setting processing with the maintenance performing order in the collective preparation list.

### (i) S501

The control unit 130 receives registration of a collective preparation list A by the operator on the collective preparation operation setting screen 200.

### (ii) S502

The control unit 130 determines whether the registered collective preparation list A includes automatic blank calibration. If the collective preparation list A includes the automatic blank calibration (Yes in S502), the processing proceeds to S503. Meanwhile, if the collective preparation list A does not include the automatic blank calibration (No in S502), the processing proceeds to S504.

### (iii) S503

The control unit 130 moves down an order in which the automatic blank calibration operation in the collective preparation list A is executed to an end.

### (iv) S504

The control unit 130 determines whether the collective preparation list A includes a maintenance item for turning off the light source lamp 113 during maintenance. If the maintenance item for turning off the light source lamp 113 is included (Yes in S504), the processing proceeds to S505. Meanwhile, if the maintenance item for turning off the light source lamp 113 is not included (No in S504), the processing proceeds to S506.

The maintenance item for turning off the light source lamp 113 include, for example, replacement of the light source lamp 113, reaction chamber water exchange for replacing water filling the reaction chamber 115, and reaction chamber cleaning for discharging water in the reaction chamber 115 to clean an inside of the chamber. For example, in the automatic analyzer 100 including the light source lamp 113 that requires 30 minutes from lighting until a light amount reaches a maximum, it is assumed that the operator adds replacement of the light source lamp 113 to the end of the collective preparation list with a total implementation time of 10 minutes. In this case, in the automatic analyzer in the related art, since the light source lamp 113 is replaced after the collective preparation operation for 10 minutes is performed, a waiting time of 30 minutes is required after the replacement is completed. In contrast, in a case of the automatic analyzer 100 equipped with the function according to the second embodiment, an implementation order in the collective preparation operation for replacing the light source lamp 113 is automatically set to a top. Accordingly, during a lamp lighting waiting time (30 minutes) after the replacement of the light source lamp 113, another collective preparation operation (10 minutes) can be implemented. Therefore, in this case, a time from start of the collective preparation operation to start of the automatic blank calibration can be shortened by 10 minutes.

### (v) S505

The control unit 130 moves up an order of the corresponding maintenance item (item for turning off the light source lamp 113 at the time of implementation) in the collective preparation list A to the top.

### (vi) S506

The control unit 130 completes an update of the collective preparation list A.

### <Parameter Setting Screen for Each Item of Automatic Blank Calibration>

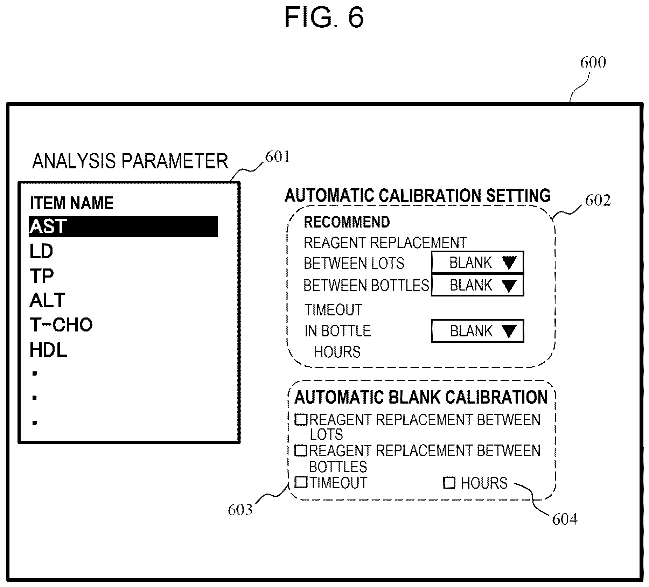

FIG. 6 is a diagram illustrating a configuration example of an analysis parameter setting screen 600 for each item of the automatic blank calibration. The analysis parameter setting screen 600 may be displayed, for example, when the operator selects analysis parameter setting from a menu display (not illustrated).

The analysis parameter setting screen 600 includes, for example, an analysis parameter item setting portion 601, an automatic calibration setting portion 602, and an automatic blank calibration setting portion 603.

On the analysis parameter setting screen 600, for example, the operator can select an item to be edited from an analysis parameter list (for example, a blood test item list) illustrated in the analysis parameter item setting portion 601 and edit various types of parameter setting. In the automatic analyzer 100, it is possible to set a timing at which implementation of automatic calibration is recommended using the automatic calibration setting portion 602. In the present embodiment, setting of a timeout time 604 can be registered from the automatic blank calibration setting portion 603. Therefore, the operator can set the timing at which the automatic blank calibration is implemented for the item selected from the analysis parameter item setting portion 601. In FIG. 6, "blank" indicates blank calibration. That is, in the automatic calibration setting portion 602, the automatic calibration setting portion 602 can set whether to implement the automatic blank calibration when reagent replacement is performed between lots or bottles. It is also possible to set whether to implement the automatic blank calibration for the reagent in the bottle (reagent in the same bottle). Further, on the analysis parameter setting screen 600, when implementation of each automatic blank calibration is set, the timeout time can be set using the automatic blank calibration setting portion 603 provided on the same setting screen (that is, without going through another screen (for example, a screen for recommending timeout setting)).

By enabling the setting as described above, the operator can determine whether to implement the automatic blank calibration for each analysis parameter. For example, by setting the timeout time 604 for an item whose condition is desired to be checked more frequently than other reagents, such as a reagent that is likely to deteriorate, more reliable reagent monitoring is possible. For example, by setting the timeout time 604 for a reagent and a measurement item whose condition is to be checked more frequently than other reagents, such as a reagent that is likely to deteriorate, reliable reagent monitoring can be performed by performing measurement within the set timeout time. That is, if the time is within the set timeout time, the measurement is performed using a target reagent, and if the timeout time elapses, the measurement is not performed using the target reagent. The reagent is stored while being maintained at a constant temperature, but there are some reagents that deteriorate after a certain time elapses from opening, and some reagents in which components in the reagent precipitate. Therefore, by checking the blank absorbance separated by a time from opening (timeout time), a problem related to the reagent (a change in blank absorbance due to reagent deterioration) is solved. In a case where the timeout time elapses when the automatic analyzer 100 is in a standby condition, it is also possible to perform an operation of preferentially measuring the corresponding item together with the start of the operation.

### <Omission of Waiting Time After Lighting of Light Source Lamp 113: Time-Saving mode>

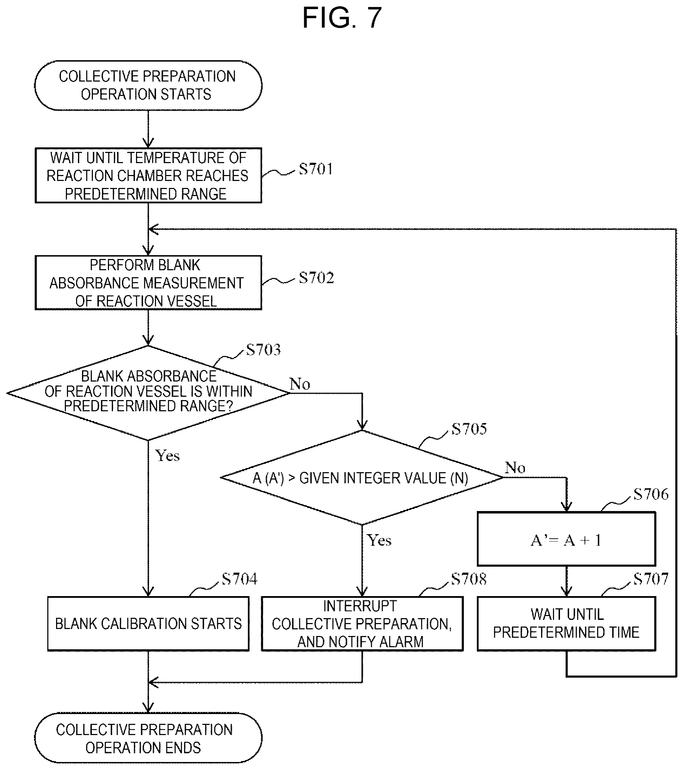

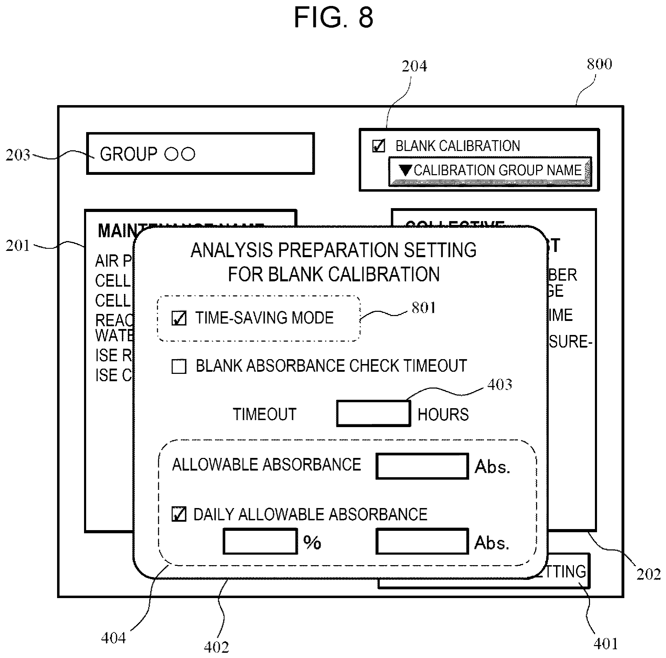

FIG. 7 is a flowchart illustrating a collective preparation operation when the waiting time for stability of the light source lamp 113 is omitted according to the second embodiment. The collective preparation operation illustrated in FIG. 7 is distinguished from, for example, the analysis preparation operation or the collective preparation operation (normal mode) illustrated in FIG. 3, and is referred to as the "time-saving mode" (which may be a "quick mode" or the like). FIG. 8 is a diagram illustrating a configuration example of a collective preparation operation setting screen 800 for setting the time-saving mode. An operator can set (select) execution of the time-saving mode by checking a time-saving mode selection field 801 on the collective preparation operation setting screen 800 illustrated in FIG. 8. When selecting the normal mode (with the waiting time of the light source lamp 113), the operator may not check the time-saving mode selection field 801.

### (i) S701

In a case where the time-saving mode is selected, when the collective preparation operation is started, the control unit 130 records a variable A = 1, which defines the number of times of blank absorbance measurement of the reaction vessel 105, in an internal memory (not illustrated), and suspends the analysis preparation until a temperature of the reaction chamber 115 reaches a predetermined range. During the suspension of preparation in S701, execution of other maintenance items may be enabled.

### (ii) S702

When the control unit 130 detects that the temperature of the reaction chamber 115 reaches the predetermined range, the control unit 130 instructs the analysis unit 120 to execute the blank absorbance measurement of the reaction vessel 105. In response to the instruction from the control unit 130, the analysis unit 120 measures the blank absorbance of the reaction vessel 105.

### (iii) S703

The control unit 130 determines whether the blank absorbance of the reaction vessel 105 measured in step 702 is within a predetermined range. If the blank absorbance is within the predetermined range (Yes in S703), the processing proceeds to S704. Meanwhile, if the blank absorbance is out of the predetermined range (No in S703), the processing proceeds to S705.

### (iv) S704

The control unit 130 starts blank calibration measurement.

### (v) S705

The control unit 130 determines whether a value of the variable A exceeds a predetermined integer value (preset value). If the value of the variable A is equal to or smaller than a given integer value (setting value N) (No in S705), the processing proceeds to S706. If the value of the variable A is larger than (exceeds) the given integer value (setting value N) (Yes in S705), the processing proceeds to S708. The given integer value (N) indicates the number of repetitions of the blank absorbance measurement of the reaction vessel 105, and can be set to any value by the operator.

### (vi) S706

The control unit 130 adds 1 to a current value of the variable A to obtain a variable A' (A' = A + 1), and stores the variable A' in the internal memory (not illustrated) or the like.

### (vii) S707

The control unit 130 stops (waits) the processing of the reaction vessel 105 for a predetermined time (any setting value) from a time point when the blank absorbance obtained by the most recent measurement is determined to be out of the predetermined range, and ensures the stability of the light source lamp 113. Accordingly, it is possible to avoid repeating the reaction vessel blank absorbance measurement while the light amount of the light source lamp 113 is not stable.

After waiting for the predetermined time, the control unit 130 performs the blank absorbance measurement of the reaction vessel 105 again in S703.

### (viii) S708

The control unit 130 determines that the blank absorbance measurement of the reaction vessel 105 fails, displays an alarm, and interrupts the collective preparation operation for which the execution instruction is issued.

As described above, according to the present embodiment, it is expected to shorten a time of the collective preparation operation by allocating a portion (time) set as the waiting time until the light amount of the light source lamp 113 is stabilized to the blank absorbance measurement of the reaction vessel 105. In addition, in S703, in a case where the above-described daily allowable absorbance (24 hours) is enabled, when the measured blank absorbance of the reaction vessel 105 is within the daily allowable absorbance range, the control unit 130 determines that the spectrophotometer 112 is stable, and starts the blank calibration measurement in S704.

Although this operation is described for the automatic analyzer 100, this operation is a technique applicable to an analysis device that performs analysis using system water, and a field of use is not limited.

### (3) Summary

(i) According to the present embodiment, in the automatic analyzer 100, the control unit 130 executes, before executing the automatic blank calibration, the analysis preparation operation (blank absorbance measurement of the reaction vessel 105, lighting time detection of the light source lamp 113, and the like) including the temperature detection operation of the reaction chamber 115 for performing temperature control of the reaction vessel 105 and other operations, and confirms that the condition of the automatic analyzer 100 is stable. Then, the control unit 130 measures the blank absorbance of the reaction vessel 105 when it is determined that the predetermined time has elapsed from lighting of the light source lamp 113. In this way, since the blank calibration is automatically executed after the condition of the automatic analyzer 100 is confirmed, it is possible to avoid a calibration failure due to a device failure. For example, the analysis preparation operation includes an operation of measuring the blank absorbance of the reaction vessel 105. The control unit 130 automatically executes the blank calibration when a value of the blank absorbance obtained by the analysis preparation operation is within a predetermined range. Blank absorbance measurement may not be performed every time. For example, when the blank absorbance obtained in the previous blank absorbance measurement is within a predetermined range and an elapsed time is within a predetermined time from the previous blank absorbance measurement, the control unit 130 determines that the blank absorbance of the reaction vessel 105 is equal to or less than a predetermined value, and automatically executes blank calibration without measuring the blank absorbance again (S304 → S307).

The control unit 130 executes automatic blank calibration when the temperature of the reaction chamber 115 is within a predetermined temperature range. After the light source lamp 113 is stabilized, the temperature range of the reaction chamber 115 is further confirmed to determine whether the blank calibration can be implemented appropriately, thereby improving accuracy of the blank calibration.

In the automatic analyzer 100 according to the present embodiment, the control unit 130 executes processing of displaying the collective preparation operation setting screen 200 for setting an item of the analysis preparation operation from a plurality of maintenance items on the screen of the display device 140, and processing of registering the selected maintenance item in a storage unit as the collective preparation operation in response to an input selection instruction. The collective preparation operation setting screen 200 includes the blank calibration selection field 204 for selecting execution of the automatic blank calibration. When the execution of the automatic blank calibration is selected (when the check box of the blank calibration selection field 204 is checked), the control unit 130 additionally executes a maintenance item (photometer check or cell blank measurement) other than the maintenance item selected as the collective preparation operation. Accordingly, it is possible to reliably execute an essential maintenance item necessary for executing the automatic blank calibration, and thus it is possible to guarantee the accuracy of the blank calibration.

When the collective preparation operation designated by the operator includes turning off the light source lamp 113 as the maintenance item, the control unit 130 starts the collective preparation operation with turning off the light source lamp 113. Since it takes time to stabilize the light source lamp 113, a time until stabilization can be used to check another maintenance item, and analysis preparation can be efficiently performed.

The second embodiment of the present disclosure proposes the time-saving mode of the analysis preparation operation. Specifically, the control unit 130 displays, on the screen of the display device 140, a mode setting screen for setting a time-saving mode in which a waiting operation for a predetermined time after lighting of the light source lamp 113 is omitted until the operation of the light source lamp that irradiates the reaction vessel 105 is stabilized. When the time-saving mode is set (selected) by the operator, the control unit 130 executes the automatic blank calibration after confirming that the blank absorbance measurement of the reaction vessel 105 is within a predetermined range. When the control unit 130 determines that the blank absorbance measurement of the reaction vessel 105 is not within the predetermined range, the blank absorbance measurement is repeated (the number of repetitions is preset (limited) to N). Accordingly, the waiting time until the light amount of the light source lamp 113 is stabilized can be allocated to the blank absorbance measurement operation of the reaction vessel 105, so that the time of the collective preparation operation can be shortened.

(ii) Functions of the present embodiment can also be implemented by a software program code. In this case, a storage medium that stores the program code is provided in a system or a device, and a computer (or CPU or MPU) of the system or the device reads the program code stored in the storage medium. In this case, the program code read from the storage medium implements the functions of the above-described embodiment, and the program code and the storage medium that stores the program code constitute the present disclosure. Examples of the storage medium for supplying such a program code include a flexible disk, a CD-ROM, a DVD-ROM, a hard disk, an optical disk, a magneto-optical disk, a CD-R, a magnetic tape, a nonvolatile memory card, and a ROM.

An operating system (OS) or the like operating on a computer may perform a part or all of actual processing based on an instruction of the program code, and the functions of the above-described embodiments may be implemented by the processing. Further, after the program code read from the storage medium is written in a memory on the computer, a CPU or the like of the computer may perform a part or all of actual processing based on an instruction of the program code, and the functions of the above-described embodiments may be implemented by the processing.

Further, the software program code for implementing the functions of the embodiments may be stored, by distributing via a network, in a storage unit such as a hard disk or a memory of the system or the device or a storage medium such as a CD-RW or a CD-R, and the computer (or CPU or MPU) of the system or the device may read and execute the program code stored in the storage unit or the storage medium at the time of use.

The process and technique described here are not essentially related to any specific device, and can be implemented by a combination of each component. In addition, various types of general-purpose devices can be added. A dedicated device may be constructed to execute the functions of the present embodiment and each example. In addition, various functions can be formed by appropriately combining a plurality of components disclosed in the present embodiment and each example. For example, some components may be deleted from all the components shown in the embodiment and each example, or components in different examples may be appropriately combined.

In the present disclosure, specific examples are described, but these are for description (understanding of the technology of the present disclosure) without limitation in all viewpoints. Those skilled in the art will readily recognize that there are numerous combinations of hardware, software, and firmware that are suitable for implementing the techniques of the present disclosure. For example, the above-described software can be implemented in a wide range of programs or script languages such as assembler, C/C++, perl, Shell, PHP, and Java (registered trademark).

Further, control lines and information lines considered to be necessary for description are shown in the above-described embodiments, and not all control lines and information lines in a product are necessarily shown. All configurations may be connected to one another.

In addition, those skilled in the art can clarify other implementations of the present disclosure from consideration of the present embodiment and each example. The description and the specific examples are merely typical, and the scope and spirit of the technology of the present disclosure are indicated by the following claims.

### Reference Signs List

101: specimen vessel
102: specimen conveying rack
103, 104: specimen dispensing mechanism
105: reaction vessel
106, 107: reagent dispensing mechanism
108: reagent bottle
109: reagent disk
110: specimen installation unit
111: stirring device
112: spectrophotometer
113: light source lamp
114: detector
115: reaction chamber
120: analysis unit
130: control unit
140: display device

## Claims

1. An automatic analyzer for executing automatic blank calibration, and measuring a change over time in a mixture liquid obtained by mixing a specimen and a reagent, the automatic analyzer comprising:
a reaction vessel configured to accommodate the specimen and the reagent;
an analysis unit configured to measure the mixture liquid accommodated in the reaction vessel;
a reaction chamber configured to control a temperature of the reaction vessel; and
a control unit, wherein
the control unit executes, before executing the automatic blank calibration, analysis preparation operations including a reaction chamber temperature detection operation and other operations, and confirms that a condition of the automatic analyzer is stable.

2. The automatic analyzer according to claim 1, further comprising:
a light source lamp configured to irradiate the reaction vessel; and
a detector configured to detect transmitted light when the reaction vessel is irradiated with light, wherein
the analysis preparation operations include an operation of measuring blank absorbance of the reaction vessel, and
the control unit executes the automatic blank calibration when the blank absorbance is within a predetermined range.

3. The automatic analyzer according to claim 2, wherein
the control unit determines that the blank absorbance of the reaction vessel is equal to or less than a predetermined value when the blank absorbance obtained in previous blank absorbance measurement is within a predetermined range and an elapsed time is within a predetermined time from the previous blank absorbance measurement.

4. The automatic analyzer according to claim 2, wherein
the control unit measures the blank absorbance of the reaction vessel when determining that a predetermined time has elapsed from lighting of the light source lamp.

5. The automatic analyzer according to claim 1, wherein
the control unit executes the automatic blank calibration when a temperature of the reaction chamber is within a predetermined temperature range.

6. The automatic analyzer according to claim 1, wherein
the control unit executes processing of displaying a collective preparation operation setting screen for setting an item of the analysis preparation operation from a plurality of maintenance items on a screen of a display device, and processing of registering a selected maintenance item in a storage unit as a collective preparation operation in response to an input selection instruction.

7. The automatic analyzer according to claim 6, wherein
the collective preparation operation setting screen includes a blank calibration selection field for selecting execution of the automatic blank calibration, and
when execution of the automatic blank calibration is selected, the control unit additionally executes a maintenance item other than the maintenance item selected as the collective preparation operation.

8. The automatic analyzer according to claim 7, wherein
when execution of the automatic blank calibration is selected, the control unit executes the automatic blank calibration after executing all the maintenance items in the collective preparation operation.

9. The automatic analyzer according to claim 6, wherein
when the collective preparation operation includes turning off a light source lamp as the maintenance item, the control unit starts the collective preparation operation with turning off the light source lamp.

10. The automatic analyzer according to claim 1, wherein
the control unit displays, on a screen of a display device, a mode setting screen for setting a time-saving mode in which a waiting operation for a predetermined time after lighting of a light source lamp that irradiates the reaction vessel is omitted until an operation of the light source lamp is stabilized, and when the time-saving mode is set, the control unit executes the automatic blank calibration after confirming that blank absorbance measurement of the reaction vessel is within a predetermined range.

11. The automatic analyzer according to claim 10, wherein
when the control unit determines that the blank absorbance measurement of the reaction vessel is not within the predetermined range, the blank absorbance measurement is repeated.

12. An automatic analysis method for controlling, by a control unit of an automatic analyzer, execution of blank calibration and measurement of a change over time in a mixture liquid obtained by mixing a specimen and a reagent by an analysis unit, the automatic analysis method comprising:
executing, by the control unit before executing automatic blank calibration, analysis preparation operations including a reaction chamber temperature detection operation for performing temperature control of a reaction vessel configured to accommodate the specimen and the reagent, and other operations; and
executing, by the control unit, the automatic blank calibration after confirming that a condition of the automatic analyzer is stable by the analysis preparation operation.
